# EUROPÄISCHE PATENTSCHRIFT

(11) **EP 1 528 268 B1**
(45) Veröffentlichungstag und Bekanntmachung des Hinweises auf die Patenterteilung: **25.07.2007**
(21) Anmeldenummer: 04024918.7
(22) Anmeldetag: 20.10.2004
(51) Int. Cl.: F16B 5/02, F16B 7/18, F16B 25/00

(54) **Bauteilverschraubung sowie Verfahren zur Herstellung eines Schraubdoms**
Screwed component and method for producing a screw hole
Elément de liaison vissé et méthode de fabrication d'un trou de vis

(30) Priorität: 31.10.2003 DE 10350887
(43) Veröffentlichungstag der Anmeldung: 04.05.2005
(73) Patentinhaber: MAN Nutzfahrzeuge Aktiengesellschaft, 80995 München (DE)
(72) Erfinder: Häberle, Hartmut, 81247 München (DE); Menzel, Dirk, 82110 Germering (DE)

(56) Entgegenhaltungen:
- EP-A- 0 589 399
- DE-A- 2 152 089
- DE-A- 19 732 615
- US-B1- 6 287 064

## Beschreibung

### Technisches Gebiet:

Die Erfindung bezieht sich auf ein Verfahren zur Herstellung eines Schraubdoms sowie eine Bauteilverschraubung mit einem in einem plastischen Werkstoff als sackförmiges oder als durchgängiges Kernloch ausgeführten Schraubdom, der eine hohlzylinderförmige Kernlochwandfläche aufweist, und mit einer Schraube, die über ein Außengewinde mit wenigstens einem Gewindegang verfügt und die unter Ausbildung einer schraubenförmigen Kontaktfläche zwischen der Schraube und dem Werkstoff in den Schraubdom einschraubbar ist, wobei die hohlzylinderförmige Kernlochwandfläche des Schraubdoms wenigstens zwei, zumindest teilweise in längsrichtung des Schraubdoms von einander räumlich beabstandete kernlochwandflächenbereiche aufweist. Ein solches Verfahren bzw. eine solche Bauteilverschraubung ist aus der US 6,287,064 B1 bekannt.

### Stand der Technik:

Die Schraubverbindung stellt eine der wichtigsten Möglichkeiten zum Verbinden unterschiedlicher Bauteilkomponenten bzw. zum Befestigen eines Bauteils dar. Hierbei ist allen Arten von Schraubverbindungen gemein, dass es sich bei der jeweiligen Schraubenbewegung um eine räumliche Bewegung um und längs einer festen Achse, der Schraubenachse handelt.

Die vorliegende Erfindung bezieht sich auf eine Direktverschraubung, bei der die Schraube während des Schraubvorgangs das Gewinde in das jeweilige Bauteil hineinformt. Während des Schraubvorgangs schneiden sich die Gewindegänge in das Werkstück und verdrängen einen Teil des Werkstoffs in die zwischen den Gewindegängen befindlichen Gewindelücken. Je nach Gewinde bzw. Art des Werkstoffs, in den die Schraube eingeschraubt wird, kann während des Verdrängungsprozesses in bestimmten Bereichen sogar die Fließgrenze des plastischen Werkstoffs erreicht, bzw. sogar überschritten werden.

Der wesentliche Vorteil einer Direktverschraubung gegenüber anderen Verschraubungsarten besteht darin, dass die Verschraubung auch bei dynamischen Belastungen, wie sie bspw. im Fahrzeugbau zu berücksichtigen sind, sehr sicher ist. Dies ist vor allem auf die Selbsthemmung der Schraube, die spielfreie Verschraubung und darauf, dass die gesamte Schraubenfläche, die mit dem Werkstoff im Eingriff steht, tragende Funktion übernimmt, zurückzuführen. Darüber hinaus wird bei einer Direktverschraubung kein zusätzliches Befestigungselement, wie etwa eine Mutter, benötigt und die für eine sichere Verschraubung benötigte Vorspannung ist sehr gering. Aus diesem Grund kann bei einer Direktverschraubung die Schraube auch mit einem verhältnismäßig niedrigen Einschraubmoment schnell und zuverlässig angezogen werden. Dies ist ein wesentlicher Grund dafür, dass die Direktverschraubung auch aus fertigungs- bzw. montagetechnischen Gründen erhebliche Vorteile gegenüber anderen Verschraubungstechniken aufweist. Insbesondere aus der Montage von Kunststoffbauteilen ist der Einsatz von Direktverschraubungen nicht mehr wegzudenken.

Bei der Herstellung einer Direktverschraubung in Kunststoffen wird das während des Schraubvorgangs von den Gewindegängen verdrängte Kunststoffmaterial regelrecht in den zwischen benachbarten Gewindegängen befindlichen Freiraum gequetscht. Der Kernlochdurchmesser wird hierbei derart gewählt, dass der während des Schraubvorgangs verdrängte Kunststoff die Gewindezwischenräume vollständig ausfüllt. Andererseits ist darauf zu achten, dass der Freiraum zwischen den Gewindegängen nicht zu klein gewählt wird, damit das Einschraubmoment, vor allem wenn Direktverschraubungen in Kunststoffbauteilen augeführt werden, nicht zu hoch wird.

In diesem Zusammenhang beschreibt die EP 0 589 399 eine selbstfurchende Schraube, deren Gewindegrund derart gestaltet ist, dass das verdrängte Kunststoffmaterial im Bereich der Lastflanke des Gewindes, die im wesentlichen ein Ausreißen der Schraube verhindern soll, verdichtet wird. Um die gewollte Strömung und Verdichtung des Kunstoffmaterials zu erreichen, soll die spezielle Form des Gewindes sicher stellen, dass das Material beim Eindrehen der Schraube erweicht, verschoben und verdichtet wird. Problematisch an dieser technischen Lösung ist allerdings, dass das Kunststoffgefüge während des Schraubvorgangs auf diese Weise verändert wird, was wiederum zu Nachteilen hinsichtlich der Festigkeit des Werkstoffes führen kann.

Um das Gefüge des verdrängten Kunststoffmaterials weitgehend unverändert zu belassen wird daher in der DE 197 32 615 A1 eine Befestigungsschraube mit selbstfurchendem Gewinde beschrieben, die sich durch vergleichsweise niedrige Gewindezähne auszeichnet.

Die Befestigungsschraube verfügt über einen im wesentlichen durchgehend zylindrischen Gewindegrund und Gewindezähne, die einen durchgehend gleich hohen Scheitel aufweisen, so dass die Schraube in dem Kunststoffmaterial mit relativ geringer Eindringtiefe sitzt. Damit trotz der geringen Eindringtiefe auch große Kräfte an der Schraube angreifen können, ohne dass die Gefahr des Ausreißens besteht, weist das Gewinde eine geringe Steigung auf, so dass sich eine große Anzahl von Gewindegängen im Kunststoffmaterial im Eingriff befindet.

Weiterhin ist aus der US 6,287,064 B1 ein zumindest teilweise aus einem plastischen Werkstoff hergestelltes, als Clips ausgeführtes Bauteil bekannt, in das eine Schraube einschraubbar ist. Um eine Schraubverbindung herzustellen wird in das Bauteil zunächst eine metallische Gewindehülse eingesetzt, die ein Innengewinde aufweist. Anschließend wird eine Bauteilverschraubung hergestellt, indem eine Metallschraube in das Innengewinde der Gewindehülse eingeschraubt wird. Grundvorrausetzung für die Herstellung der Verschraubung ist hierbei, dass zunächst die Gewindehülse in das Bauteil eingefügt, bspw. eingegossen wird. Durch die Einfügung einer Gewindehülse, die vorzugsweise aus einem anderen Material als das Bauteil selbst hergestellt wird, ist der Verfahrensablauf zur Herstellung des Bauteils verhältnismäßig kompliziert und zeitaufwändig. Demgegenüber bieten Direktverschraubungen gegenüber dieser technischen Lösung gerade den Vorteil, dass die Bauteilverschraubung in einem Verfahrensschritt hergestellt werden kann

Neben den Schrauben, die bei einer Direktverschraubung in einem plastischen Werkstoff, wie etwa Kunstsoff eingesetzt werden, ist die Gestaltung des Schraubdoms, also des Bereichs, in den die Schraube eingeschraubt wird, von großer Bedeutung. Schraubdome werden entweder als Sack- oder als Durchgangsloch ausgeführt und sollen eine sichere und gleichzeitig effiziente Herstellung einer Direktverschraubung sicherstellen. Bis auf den besseren Korrosionsschutz bei der Sacklochvariante sind beide Lösungen gleichwertig. Je nach Bauteilauslegung, Werkzeugauslegung, vorhandenem Bauraum und erforderlicher Einschraublänge wird die jeweilige Variante ausgewählt. Für jeden Kunststoff, in dem die Verschraubung vorgenommen weren soll variiert die erforderliche Einschraublänge und damit die Gestaltung des Schraubdomes.

Zur Herstellung eines Schraubdomes sind im Wesentlichen zwei Varianten bekannt. Eine Möglichkeit besteht darin, an dem formgebenden Werkzeug, mit dem das Bauteil geformt wird, Werkzeugbolzen vorzusehen, um die herum sich bei der Herstellung Kunststoffmaterial ansammelt und so ein Sackloch erzeugt wird. Nachteilig hierbei ist, dass zusätzliche werkzeugtechnische Maßnahmen vorzusehen sind und dass kein exaktes Lochbild für die Verschraubungen erzeugt wird, da die Fertigungstoleranzen je nach Verfahren sehr groß sind.

Eine zweite Fertigungsvariante sieht daher vor, keine Werkzeuge mit entsprechenden Werkzeugbolzen zu verwenden, sondern die Bauteile mit einer Bauteilwand, die eine einheitliche Wanddicke aufweist, auszuführen und nachträglich Durchgangslöcher in die Bauteilwand einzubringen, die als Schraubdom nutzbar sind. Bei diesem Verfahren handelt es sich somit um ein zweistufiges Fertigungsverfahren, bei dem nach Beendigung des ersten Verfahrensschrittes, also der eigentlichen Herstellung des Bauteils, die Bauteiloberfläche geschlossen ist. Erst in dem zweiten Fertigungsschritt wird der vorher durch einen Werkzeugbolzen gebildete Schraubdom durch ein einfaches Durchbohren der Materialdicke an der entsprechenden Bauteilstelle erzeugt. Diese Vorgehensweise hat den Vorteil, dass die Lochbildtoleranzen sehr genau eingehalten werden, andererseits aber den Nachteil, dass die effektive Einschraublänge der Verschraubung nur der Bauteildicke entspricht, die wiederum relativ großen Schwankungen unterliegt. Die Herstellung einer funktionssicheren, zuverlässigen Verschraubung ist daher mit dem letztgenannten Verfahren nicht möglich. Ein weiteres Problem, das sich auf Grund der geringen Einschraublänge in der Bauteilwand ergibt, ist, dass die für die Verschraubung notwendigen, sehr geringen Einschraubmomente nicht prozessicher beherrschbar sind.

Ausgehend von dem bekannten Stand der Technik liegt der Erfindung die Aufgabe zu Grunde, eine Bauteilverschraubung anzugeben, die eine sichere und fertigungstechnisch effektive Direktverschraubung von Bauteilen aus plastischen Werkstoffen ermöglicht. Insbesondere soll die Direktverschraubung auch die sichere Befestigung von Bauteilen komplizierter Geometrie ermöglichen. Ferner besteht die Aufgabe der Erfindung darin, ein Verfahren anzugeben, mit dem sicher, zuverlässig und kostengünstig ein Schraubdom herzustellen ist, der die einfache Realisierung einer Direktverschraubung ermöglicht.

Die der Erfindung zu Grunde liegende Aufgabe wird mit einer Bauteilverschraubung, die die im Anspruch 1 angegebenen Merkmale aufweist, gelöst. Außerdem wird im Anspruch 7 ein Verfahren zur Herstellung eines Schraubbdoms, mit dem die der Erfindung zu Grunde liegende Aufgabe lösbar ist, angegeben. Vorteilhafte Weiterbildungen der Erfindung sind den Unteransprüchen sowie der folgenden Beschreibung unter Bezugnahme auf die Figuren zu entnehmen.

Erfindungsgemäß ist eine Bauteilverschraubung in einem zumindest teilweise einen plastischen Werkstoff aufweisenden Bauteil mit einem als sackförmiges oder als durchgängiges Kernloch ausgeführten Schraubdom, der eine hohlzylinderförmige Kernlochwandfläche aufweist, und mit einer Schraube, die über ein Außengewinde mit wenigstens einem Gewindegang verfügt und die unter Ausbildung einer schraubenförmigen Kontaktfläche zwischen der Schraube und dem Werkstoff in den Schraubdom einschraubbar ist, wobei die hohlzylinderförmige Kernlochwandfläche des Schraubdoms wenigstens zwei, zumindest teilweise in Längsrichtung des Schraubdoms von einander räumlich beabstandete Kernlochwandflächenbereiche aufweist, derart weitergebildet, dass die Kontaktfläche zwischen der Schraube und dem Werkstoff in den wenigstens zwei, zumindest teilweise in Längsrichtung des Schraubdomes von einander räumlich beabstandeten Kernlochwandflächenbereichen ausgebildet ist.

Die Bauteilverschraubung mit den vorgenannten Merkmalen zeichnet sich somit dadurch aus, dass die mit der Schraube im Eingriff befindliche Fläche des Schraubdomes nicht zusammenhängend sondern mit zwei zumindest teilweise in Längsrichtung des Schraubdomes von einander räumlich beabstandeten Flächenbereichen ausgeführt ist. Auf diese Weise ist der während der Herstellung einer Direktverschraubung effektiv im Eingriff befindliche Gewindebereich, der ein Ausreißen der Schraube aus dem plastischen Werkstoff verhindern soll, auf wenigstens zwei Bereiche verteilt. Die für die jeweilige Direktverschraubung erforderliche Einschraublänge ist somit auch bei komplizierter Bauteilgeometrie zu erreichen, indem die jeweils für den Eingriff mit der Schraube vorgesehenen Bereiche des Schraubdomes in separate, räumlich von einander beabstandete Abschnitte aufgeteilt werden. Hierbei ist es unerheblich, ob der Bereich des Schraubdoms, der mit dem Außengewinde der Schraube in Kontakt gebracht wird, in zwei oder noch mehr Teilbereiche aufgeteilt ist. Wesentlich ist lediglich, dass die verschiedenen Teilbereiche in Längsrichtung des Schraubdomes zumindest teilweise beabstandet angeordnet sind. Die Festlegung der Anzahl und Größe der jeweiligen Teilbereiche und damit der Einschraublänge bzw. der Aufteilung der Einschraublänge erfolgt in Abhängigkeit der Bauteilauslegung, der Werkzeugauslegung sowie des vorhandenen Bauraums.

Eine besondere Ausführungsform der erfindungsgemäßen Bauteilverschraubung sieht vor, dass das zu verschraubende Bauteil eine Bauteilwand aufweist, die wenigstens abschnittsweise wellen- und/oder faltenförmig ausgeführt ist, wobei die einzelnen Wellen bzw. Falten jeweils über Durchgangslöcher verfügen, deren Mittenachsen zumindest annähernd zusammenfallen. Vorzugsweise ist die Bauteilwand aus einem thermoplastischen Kunststoff gefertigt. Je nach den Anforderungen an die Einschraublänge, die für die Herstellung einer gegen Ausreißen sicheren Direktverschraubung erforderlich ist, wird die Bauteilwand in den für die Verschraubung vorgesehenen Bereichen so oft gewellt und/oder gefaltet sowie in die Bereiche Durchgangslöcher eingebracht, dass die Summe der Wandstärken der einzelnen gewölbten und/oder gefalteten Abschnitte der Bauteilwand mindestens genauso groß, wie die erforderliche Einschraublänge ist. Vorzugsweise sind die Wandstärken der einzelnen Abschnitte der Bauteilwand gleich groß. Es ist aber auch denkbar, die Bauteilwand derart zu wellen und/oder zu falten, dass die Wandstärken der einzelnen Abschnitte ungleich groß sind.

Da es sich bei dem Bauteil, in dem die Direktverschraubung eingebracht werden soll, vorzugsweise um ein Bauteil handelt, das eine überwiegend geschlossene Oberfläche aufweist, stellen die im gewellten bzw. im gefalteten Bereich vorgesehenen Durchgangslöcher zunächst offene Verbindungen zwischen dem Außenbereich des Bauteils und dem Bauteilinnenraum dar. Vorzugsweise wird der gewindeformende Schraubvorgang daher derart gestaltet, dass diese, zum Außenbereich des Bauteils offenen Bereiche, durch die Verschraubung wieder geschlossen werden, so dass keine Medien über die Durchgangslöcher in das geschlossene Bauteil eindringen können.

In einer weiteren Ausführungsform wird eine zulässige Mittentoleranz des Schraubdoms, die ein Maß für den Abstand zwischen einer in Längsrichtung des Schraubdomes verlaufenden Ist-Mittenachse zur Soll-Mittenachse ist, in Abhängigkeit der Größe des Bauteils, das den Schraubdom aufweist, gewählt. Bei Bauteilen mit einer Größe von bis zu 1200 x 300 x 300 mm wird für die zulässige Mittentoleranz vorzugsweise ein Wert von 5 mm gewählt. Bei größeren Bauteilen, bspw. des sog. Aeropakets bei Nutzfahrzeugen, ist es allerdings auch denkbar, dass die zulässige Mittentoleranz bauteilangepasst größer gewählt wird.

Alternativ zur bereits erläuterten wellen- bzw. faltenförmigen Ausgestaltung der Bauteilwand ist es ebenfalls denkbar, an der Bauteilwand Rippen vorzusehen, die derart mit entsprechenden Löchern versehen werden, dass sich die Lochöffnungen der verschiedenen Löcher wenigstens teilweise überdecken, so dass eine Schraube in den aus den gelochten Rippen gebildeten Schraubdom einschraubbar ist. Auch bei dieser Ausführungsvariante ist es vorteilhaft, die Lagetoleranz der Löcher derart zu wählen, dass die Ist-Mittenachsen der Löcher in den einzelnen Rippen nicht mehr als 5 mm von der Lage der Soll-Mittenachse abweichen.

Um die erfindungsgemäße Bauteilverschraubung in einer Bauteilwand eines Kunststoffbauteils verwirklichen zu können ist vorzugsweise ein Schraubdom vorzusehen, der mit einem Verfahren hergestellt wird, bei dem das Kunststoffbauteil mittels eines Rotationsschmelzverfahrens erzeugt wird, und das sich dadurch auszeichnet, dass in einen ersten Wandabschnitt der Bauteilwand ein Durchgangsloch mit zwei in gegenüberliegenden Oberflächenbereichen des ersten Wandabschnitts befindlichen Lochöffnungen eingebracht wird und in wenigstens einen zweiten Wandbschnitt der Bauteilwand ein Durchgangs- oder ein Sackloch mit wenigstens einer in einem Oberflächenbereich des zweiten Wandabschnittes befindlichen Lochöffnung eingebracht wird und dass die Bauteilwand derart geformt wird, dass sich die Lochöffnungen des ersten und des zweiten Wandabschnitts räumlich beabstandet wenigstens teilweise überdecken.

Genauso ist es allerdings auch denkbar, das Kunststoffbauteil mit Hilfe eines Blasverfahrens, Thermoplastspritzgießens, Heißpressens, Thermoformens, Handlaminierens, mittels eines spanenden Fertigungsverfahrens oder eines anderen Verfahrens, das üblicherweise zur Herstellung von Kunststoffbauteilen eingesetzt wird, zu erzeugen.

Mit dem erfindungsgemäßen Verfahren wird zunächst entweder mit einem Verfahren, das nur mit einer bauteilformenden Werkzeughälfte arbeitet, wie etwa das Rotationsschmelzverfahren, mit einem urformenden Herstellverfahren, wie etwa Thermoplastspritzgießen bzw. Heißpressen (SMC) oder mit einem spanenden Herstellungsverfahren ein Kunststoffbauteil mit einer zumindest weitgehend geschlossenen Oberfläche hergestellt. Die urformenden Herstellverfahren zeichnen sich hierbei durch besonders geringe Herstelltoleranzen aus, so dass die für die Erzeugung von Schraubdomen erforderlichen Lochbilder vorzugsweise mit der Herstellung des Bauteils in die Bauteilwand eingebracht werden. In diesem Fall wird das gesamte Kunststoffbauteil mit den Schraubdomen in einem Verfahrensschritt gefertigt.

Beim Rotationsschmelzverfahren ist es hingegen vorteilhaft, die für die Herstellung der Schraubdome benötigten Löcher in einem zweiten Verfahrensschritt in die Bauteilwand einzubringen. Hierbei wird nach der Herstellung eines geschlossenen Kunststoffbauteils das erforderliche Lochbild mit Hilfe eines Fräs- und/oder eines Bohrvorgangs in die Bauteilwand eingebracht.

In einer weiteren, besonders geeigneten Ausführungsform des erfindungsgemäßen Verfahrens fräßt ein Fräser ausgehend von einem Bauteilreferenzpunkt das entsprechende Lochbild derart, dass die erzeugten Schraubdome aus wenigstens zwei in Längsrichtung der Schraubdome räumlich zumindest teilweise beabstandeten Durchgangs- und /oder Sacklöchern gebildet werden. Vorzugsweise ist die Bauteilwand wellen- und/oder faltenförmig ausgeführt, so dass mit einem Fräsvorgang ein Schraubdom mit wenigstens zwei räumlich von einander beabstandeten Bereichen gebildet werden, die während des Verschraubungsvorgangs mit dem Gewinde der Schraube in Kontakt gebracht werden. Auf Grund der zumindest abschnittsweise wellen- bzw. faltenförmigen Gestaltung der Bauteilwand werden für den Schraubdom zwei oder mehr hintereinander liegende Wandbereiche mit der entsprechenden Materialdicke für die Direktverschraubung genutzt. Die Größe der zu realisierenden Einschraublänge wird hierbei durch die Anzahl der von einer Schraube durchörterten, hintereinander liegenden Wandabschnitte bestimmt.

Im Folgenden wird die Erfindung an Hand eines Ausführungsbeispiels unter Zugrundelegung der Figuren näher erläutert. Es zeigen:
- Fig. 1: Darstellung eines Schraubdomes in einer wellenförmig ausgebildeten Bauteilwand
- Fig. 2: Draufsicht auf einen Schraubdom
- Fig. 3: Luftansaugschacht eines Lastkraftwagens
- Fig. 4: Darstellung von nach dem Stand der Technik als sackförmige bzw. als durchgängige Kernlöcher ausgeführten Schraubdomen
- Fig. 5: Darstellung der Bemassung von Einschraub- bzw. Durchgangslöchern

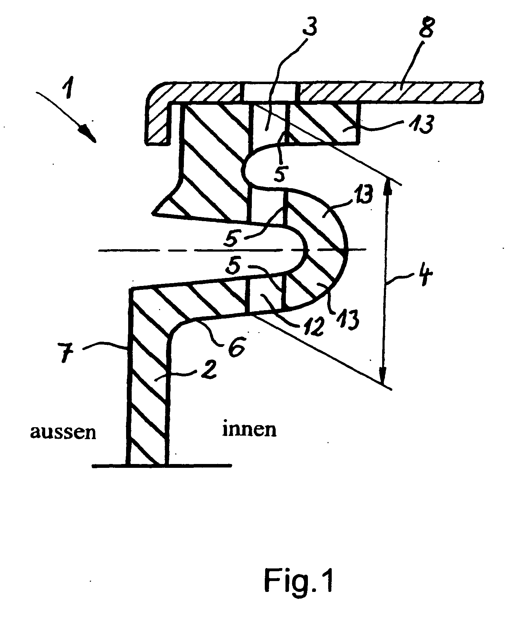

Figur 1 zeigt ein Bauteil 1, das über einen Schraubdom 3 verfügt, der mit dem erfindungsgemäßen Verfahren hergestellt worden ist. Der Schraubdom 3 ermöglicht ferner den Einsatz der erfindungsgemäßen Bauteilverschraubung, mit der ein Deckel 8 mittels einer Direktverschraubung am Bauteil 1 befestigt wird. Da die äußere Oberfläche der Bauteilwand 7 eine hohe Güte aufweist, kann der Deckel 8 sehr genau mit dem Bauteil 1 verfügt werden. Demgegenüber ist die innere Oberfläche der Bauteilwand 6, die für die Befestigung des Deckels 8 unbedeutend ist, verhälnismäßig rauh.

Die Bauteilwand 2 ist wellenförmig gestaltet und verfügt im Bereich der wellenförmigen Abschnitte 13 über drei durchgängig ausgeführte Kernlöcher 12, die gemeinsam einen Schraubdom 3 bilden und die in Längsrichtung des Schraubdomes 3 räumlich beabstandet zueinander angeordnet sind. Der Durchmesser der Kernlöcher 12 ist hierbei derart dimensioniert, dass der während des Schraubvorgangs verdrängte Werkstoff die Freiräume zwischen den Gewindegängen zumindest nahezu vollständig ausfüllt. Ferner verfügt der aus den drei Durchgangslöchern 12 gebildete Schraubdom 3 über eine hohlzylinderförmige Kernlochwandfläche 4, die aus drei Kernlochwandflächenbereichen 5, nämlich den Mantelflächen der Durchgangslöcher 12, gebildet wird und die während des Schraubvorgangs vom Außengewinde der Schraube durchschnitten wird. Die Einschraublänge des Schraubdomes 3 entspricht somit der Summe der Lochtiefen der drei Durchgangslöcher 12. Da die Lochtiefen wiederum der jeweiligen Wandstärke der Bauteilwand 2 entsprechen, wird durch die wellenförmige Ausbildung der Bauteilwand 2 sowie das Vorsehen entsprechender Durchgangsbohrungen 12 in diesem Bereich die für eine zuverlässige Direktverschraubung erforderliche Einschraublänge realisiert, ohne dass an der Bauteilwand 2 spezielle Verstärkungen vorgesehen werden müssen. Bei der Auslegung der wellenförmigen Abschnitte 13 wird eine Herstellungstoleranz berücksichtigt, bei der die Istlage des Bohrungsmittelpunktes um bis zu 5 mm um die Sollage schwanken darf.

Die Abdichtung des Bauteils 1 nach außen erfolgt auf Grund des gewindeformenden Schraubvorgangs, durch den die drei Durchgangsbohrungen 12 wieder geschlossen werden. Auf diese Weise wird sicher verhindert, dass fremde Medien, wie etwa Luft oder Wasser, von außen in das geschlossene Bauteil 1 eindringen können.

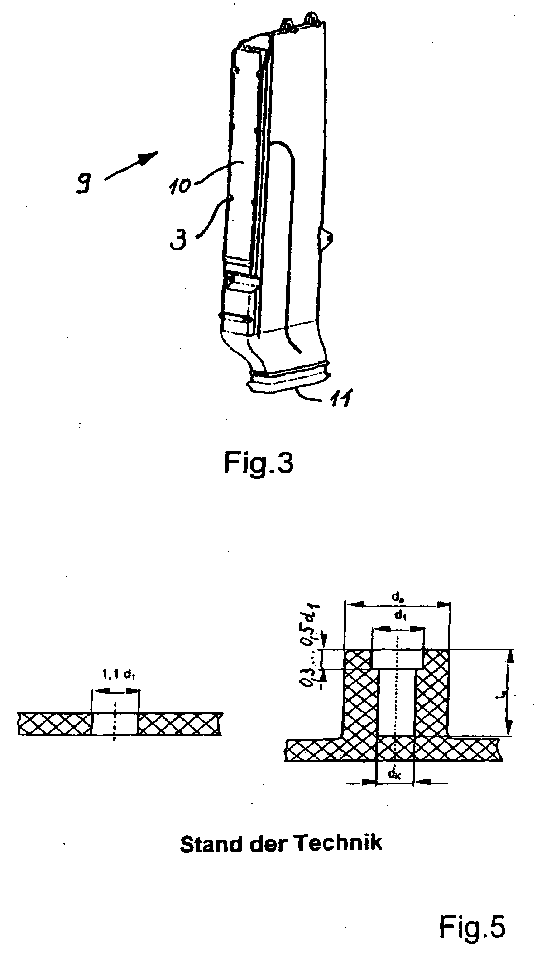

Die Einschraublänge, also die Tiefe des Schraubdoms 3 und damit der Bereich in dem eine Schraube bei einer Direktverschraubung mit dem Schraubdom 3 in Kontakt gebracht wird, hängt im Wesentlichen von der konstruktiven Gestaltung des Bauteils 1 sowie des für das Bauteil gewählten Werkstoffs ab. Als Werkstoffe kommen sowohl thermoplastische als duroplastische Kunststoffe in Frage. Mit Hilfe der folgenden Tabelle lassen sich die optimalen Einschraublängen für drei besonders geeignete thermoplastische Kunststoffe, nämlich für Acryl Butadien Styrol / Polycarbonat - Blend (ABS/PC-Blend), für glasfaserverstärktes Polyamid (PA 6.6-GF 30) und für hartes Polyethylen (PE hart), ermitteln. Die zeichnerische Darstellung der in der Tabelle angegebenen Größen d_{K}, dₐmin, d₁ und tₑmin ist der Figur 5 zu entnehmen.

| Werkstoff | Kernlochdurchmesser | Außendurchmesser | Einschraubtiefe |
|---|---|---|---|
| | d_{K} | dₐmin | tₑmin |
| ABS/PC-Blend | 0,8 d₁ | 2 d₁ | 2 d₁ |
| PA 6.6-GF 30 | 0,82 d₁ | 1,85 d₁ | 1,8 d₁ |
| PE (hart) | 0,75 d₁ | 1,85 d₁ | 1,8 d₁ |

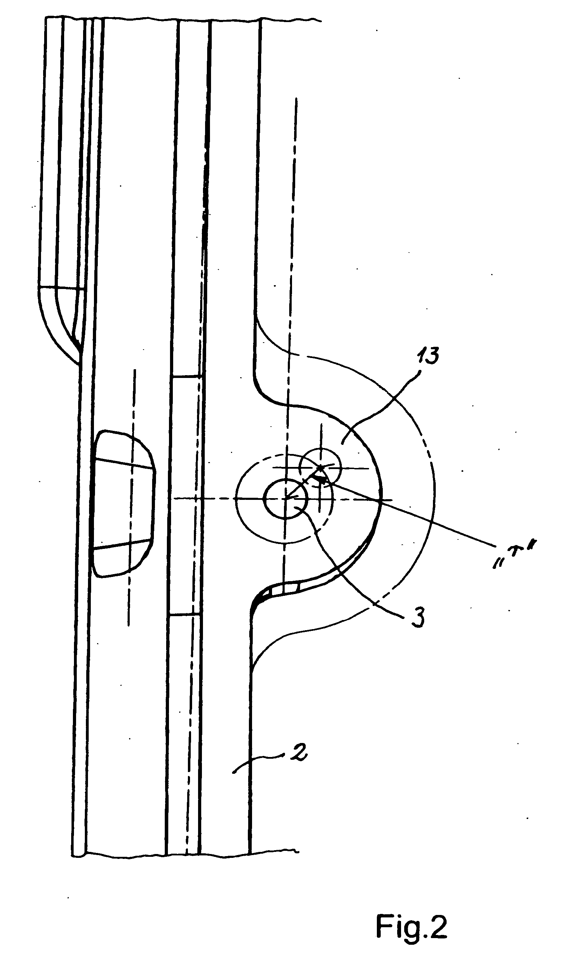

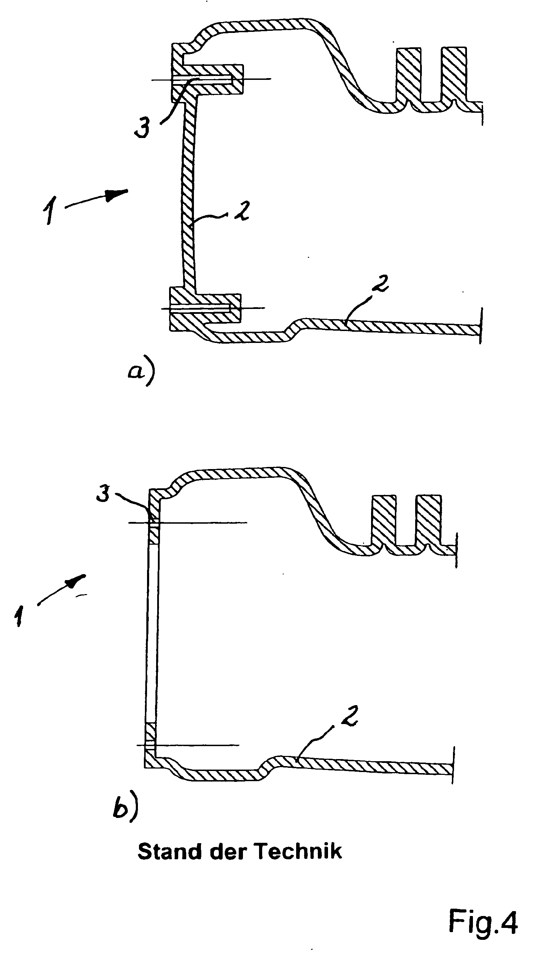

Figur 2 zeigt eine Draufsicht auf einen Schraubdom 3, der in einem wellenförmigen Abschnitt 13 der Bauteilwand 2 angeordnet ist. Weiterhin ist eine in einem Abstand "r" zum Schraubdom 3 verlaufende, gestrichelte Linie dargestellt, die den maximal zulässigen Abstand eines Ist-Mittelpunktes des Schraubdoms 3 vom Soll-Mittelpunkt repräsentiert. Der Abstand "r" wird als zulässige Mittentoleranz bezeichnet, die ein Maß für den Abstand zwischen einer in Längsrichtung des Schraubdomes verlaufenden Ist-Mittenachse zur Soll-Mittenachse ist. Die Größe der jeweils zulässigen Mittentoleranz "r" wird in Abhängigkeit der Größe eines Bauteils, das den Schraubdom 3 aufweist, gewählt. Ein mittlerer Wert für die zulässige Mittentoleranz "r", wie er etwa bei der Herstellung eines Luftansaugschachts für ein Nutzfahrzeug verwendet wird, liegt bei ca. 5 mm. Bei größeren Bauteilen, wie etwa den seitlichen Windabweisern eines Lastkraftwagens, wird die zulässige Mindesttoleranz "r" in Abhängigkeit der Bauteilgröße teilweise auch erheblich größer gewählt.

In Figur 3 ist ein Luftansaugschacht 9 abgebildet, der die, wie vorbeschrieben ausgeführten Schraubdome aufweist, und der bei Nutzfahrzeugen der Anmelderin zum Einsatz kommt. Der Luftansaugschacht 9, über den dem Motor Verbrennungsluft zugeführt wird, wird hinter dem Fahrerhaus angeordnet und stehend, also in "hochgezogener" Ausführung, am Fahrerhaus befestigt. Der Luftansaugschacht 9 weist im seitlichen Bereich eine Lufteintrittsöffnung 10 und an der Unterseite eine Luftaustrittsöffnung 11 auf. Um zu verhindern, dass Gegenstände in den Luftansaugschacht 9 gelangen, ist ein Schutzgitter (nicht dargestellt) vorgesehen, das in Strömungsrichtung vor der Lufteintrittsöffnung 11 angeordnet und mittels Direktverschraubungen am Luftansaugschacht 9 befestigt wird.

Um das Schutzgitter befestigen zu können, verfügt der Luftansaugschacht über acht Schraubdome 3 die über den Umfang der Lufteintrittsöffnung verteilt sind. Das Schutzgitter weist an den bei der Montage diesen Schraubdomen 3 gegenüberliegenden Stellen Durchgangslöcher auf, durch die eine Befestigungsschraube gesteckt und beim Schraubvorgang gewindeformend in die Schraubdome eingeschraubt wird. Die Bauteilwand des Luftansaugschachts 9 ist an den für die Verschraubung vorgesehenen Bereichen derart wellenförmig ausgeführt und mit Durchgangslöchern versehen, dass die Schraubdome 3 drei in Längsichtung der Schraubdome räumlich von einander beabstandete Bereiche aufweisen, die das Gewinde der Befestigungsschraube aufnehmen.

Auf Grund der Ausnutzung des Erfindungsgedankens bei der Herstellung eines Luftansaugschachtes 9 wird somit eine sichere, auch bei dynamischer Belastung geeignete Befestigung des Schutzgitters am Luftansaugschacht 9 zur Verfügung gestellt, die einfach und schnell zu montieren ist. Insbesondere werden für die vorbeschriebene Bauteilverschraubung bei Kunststoffbauteilen keine zusätzlichen Aufsteckmuttern oder ähnliche Befestigungsmittel benötigt.

Zum Vergleich sind in Figur 4 Kunststoffbauteile dargestellt, die die aus dem Stand der Technik bekannten Schraubdome aufweisen. Figur 4a zeigt ein Kunststoffbauteil 1 mit einer Bauteilwand 2, in der zwei Schraubdome 3 vorgesehen sind. Die Schraubdome 3 dienen als Einschraublöcher für die Herstellung einer Direktverschraubung im Kunststoffbauteil 1.

Das in Figur 4a dargestellte Bauteil 1 ist mit Hilfe des Rotationsschmelzverfahrens hergestellt worden. Beim Rotationschmelzverfahren wird in den Innenraum eines Formwerkzeugs, das bei einer Temperatur von ca. 200°C in einem geheizten Ofen aufgeheizt wird, zunächst ein Kunststoff in pulverförmigem Zustand eingebracht. Anschließend wird das Formwerkzeug derart in eine "taumelnde" Bewegung versetzt, dass der Kunststoff an der heißen Werkzeugwand aufschmilzt und auf diese Weise in die gewünschte Form gebracht wird. Da dieses Herstellungsverfahren mit nur einer bauteilformenden Werkzeughälfte arbeitet, erhält die Außenseite des Bauteils 1 eine definierte Form und Oberfläche während die Innenfläche eine weitgehend "unbearbeitete" Oberfläche aufweist. Die Herstellung der Schraubdome 3 erfolgt bei Einsatz des Rotationsschmelzverfahrens mit Hilfe von entsprechend ausgebildeten Stiften, die auf der formgebenden Werkzeughälfte angebracht sind.

Da das Rotationsschmelzverfahren mit deutlich höheren Herstelltoleranzen als urformende Herstellverfahren arbeitet und daher auch die Lochbildtoleranzen in einer relativ großen Bandbreite schwanken, kommt es während der Direktverschraubung von Bauteilen in der Montage häufig zu Schwierigkeiten. Aus diesem Grund ist aus dem Stand der Technik ein weiteres Verfahren bekannt, bei dem das Lochbild mit Hilfe eines nachträglichen Fräsvorgangs hergestellt wird. Mit einem derartigen, quasi zweistufigen Verfahren ist das in Figur 4b dargestellte Bauteil 1 hergestellt worden.

Bei dem in Figur 4b dargestellten Bauteil 1 ist die Oberfläche der Bauteilwand 2 nach Abschluss des eigentlichen Bauteilformungsprozesses zunächst geschlossen und der Schraubdom 3 wird in einem zweiten Schritt durch einfaches Durchbohren der Bauteilwand 2 an der entsprechenden Bauteilstelle hergestellt. Da der Fräsvorgang ausgehend von einem Bauteilreferenzpunkt durchgeführt wird, werden bei diesem Herstellungsverfahren Lochbildtoleranzen hoher Güte für die Schraubdome 3 eingehalten. Nachteilig ist allerdings, dass der Schraubdom 3 in diesem Fall lediglich eine Schraubdomtiefe und damit eine Einschraublänge aufweist, die der Wandstärke der Bauteilwand 2 entspricht. Da Kunststoffbauteile, wie sie etwa im Fahrzeugbau verwendet werden, Materialdicken von etwa 3 bis 6 mm, die darüber hinaus großen Schwankungen unterliegen, aufweisen , sind die mit dem vorbeschriebenen Verfahren hergestellten Schraubdome für eine funktionssichere Verschraubung nicht geeignet.

### Bezugszeichenliste

- 1: Bauteil
- 2: Bauteilwand
- 3: Schraubdom
- 4: Kernlochwandfläche
- 5: Kerlochwandflächenbereich
- 6: äußere Oberfläche der Bauteilwand
- 7: innere Oberfläche der Bauteilwand
- 8: Deckel
- 9: Luftansaugschacht
- 10: Lufteintrittsöffnung
- 11: Luftaustrittsöffnung
- 12: Durchgangsloch
- 13: wellenförmiger Abschnitt
- r: zulässige Mittenabweichung

## Patentansprüche

1. Bauteilverschraubung in einem zumindest teilweise einen plastischen Werkstoff aufweisenden Bauteil (1) mit einem als sackförmiges oder als durchgängiges Kernloch ausgeführten Schraubdom (3), der eine hohlzylinderförmige Kernlochwandfläche (4) aufweist, und mit einer Schraube, die über ein Außengewinde mit wenigstens einem Gewindegang verfügt und die unter Ausbildung einer schraubenförmigen Kontaktfläche zwischen der Schraube und dem Werkstoff in den Schraubdom (3) einschraubbar ist, wobei die hohlzylinderförmige Kernlochwandfläche (4) des Schraubdoms (3) wenigstens zwei, zumindest teilweise in Längsrichtung des Schraubdomes (3) von einander räumlich beabstandete Kernlochwandflächenbereiche (5) aufweist,
**dadurch gekennzeichnet, dass** die Kontaktfläche zwischen der Schraube und dem Werkstoff in den wenigstens zwei, zumindest teilweise in Längsrichtung des Schraubdomes (3) von einander räumlich beabstandeten Kernlochwandflächenbereichen (5) ausgebildet ist.

2. Bauteilverschraubung nach Anspruch 1, **dadurch gekennzeichnet, dass** die wenigstens zwei, zumindest teilweise in Längsrichtung des Schraubdomes (3) von einander räumlich beabstandeten Kernlochwandflächenbereiche (5) von Mantelflächen wenigstens zweier Durchgangslöcher (12), die in einer zumindest abschnittsweise wellen- und/oder faltenförmig ausgebildeten Bauteilwand (2) vorgesehen sind, gebildet werden.

3. Bauteilverschraubung nach Anspruch 1, **dadurch gekennzeichnet, dass** die wenigstens zwei, zumindest teilweise in Längsrichtung des Schraubdomes (3) von einander räumlich beabstandeten Kernlochwandflächenbereiche (5) von einer Mantelfläche eines Sackloches und einer Mantelfläche wenigstens eines Durchgangsloches (12) gebildet werden, wobei das Sackloch und das wenigstens eine Durchgangsloch (12) in einer zumindest abschnittsweise wellen- und/oder faltenförmig ausgebildeten Bauteilwand (2) angeordnet sind.

4. Bauteilverschraubung nach einem der Ansprüche 1 bis 3, **dadurch gekennzeichnet, dass** der plastische Werkstoff wenigstens teilweise einen thermoplastischen Kunststoff aufweist.

5. Bauteilverschraubung nach einem der Ansprüche 1 bis 4, **dadurch gekennzeichnet, dass** die hohlzylinderförmige Kernlochwandfläche (4) des Schraubdoms (3) in Längsrichtung über eine Länge verfügt, die wenigstens einem zweifachen Wert eines Außendurchmessers der Schraube entspricht.

6. Bauteilverschraubung nach einem der Ansprüche 1 bis 5, **dadurch gekennzeichnet, dass** der als Sack- oder als Durchgangsloch (12) ausgeführte Schraubdom (3) in Längsrichtung eine Schraubdomtiefe von wenigstens 6 mm aufweist.

7. Verfahren zur Herstellung einer Bauteilverschraubung, bei dem in ein zumindest teilweise einen plastischen Werkstoff aufweistenden Bauteil (1) ein als sackförmiges oder als durchgängiges Kernloch ausgeführter Schraubdom (3), der eine hohlzylindertörmige Kemlochwandfläche (4) ausweist, eingebracht wird und bei dem eine Schraube, die über ein Außengewinde mit wenigstens einem Gewindegang verfügt, unter Ausbildung einer schraubenförmigen Kontaktfläche zwischen der Schraube und dem Werkstoff in den Schraubdom (3) eingeschraubt wird, **dadurch gekennzeichnet, dass** mit der Schraube wenigstens in zwei, zumindest teilweise in Längsrichtung des Schraubdomes (3) von einander räumlich beabstandeten Kernlochwandflächenbereichen (5) der hohlzylinderförmigen Kernlochandfläche (4) des Schraubdoms (3) eine schraubenförmige Kontaktfläche zwischen der Schraube und dem Werkstoff ausgebildet wird.

8. Verfahren nach Anspruch 7,
**dadurch gekennzeichnet, dass** das Bauteil (1) als Kunststoffbauteil ausgeführt wird, das mittels eines Rotationsschmelzverfahrens, Thermoplastspritzgießens, Heißpressens, Blasverfahrens und/oder mittels eines spanenden Fertigungsverfahrens erzeugt wird, und dass in einen ersten Wandabschnitt der Bauteilwand ein Durchgangsloch (12) mit zwei in gegenüberliegende Oberflächenbereichen des ersten Wandabschnitts befindlichen Lochöffnungen und in wenigstens einen zweiten Wandabschnitt der Bauteilwand ein Durchgangs- (12) oder ein Sackloch mit wenigstens einer in einem Oberflächenbereich des zweiten Wandabschnittes befindlichen Lochöffnung eingebracht werden und dass die Bauteilwand (2) derart geformt wird, dass sich die Lochöffnungen des ersten und des zweiten Wandabschnitts räumlich beabstandet wenigstens teilweise überdecken.

9. Verfahren nach Anspruch 7 oder 8,
**dadurch gekennzeichnet, dass** das Durchgangsloch (12) mittels eines Bohr- oder eines Fräsvorgangs in den ersten Wandabschnitt eingebracht wird.

10. Verfahren nach einem der Ansprüche 7 bis 9, **dadurch gekennzeichnet, dass** das Durchgangs- (12) oder das Sackloch mittels eines Bohr- oder eines Fräsvorgangs in den wenigstens einen zweiten Wandabschnitt eingebracht wird.

## Claims

1. Screwed connection in a component (1) made at least partially of synthetic material, with a screw dome (3) designed as a pocket-shaped or continuous core-hole and featuring a core-hole wall face (4) with the shape of a hollow cylinder and with a screw which is provided with an external thread with at least one course of thread and can be screwed into the screw dome (3) by forming a screw-type contact face between the screw and the material, whereby the core-hole wall face (4) of the screw dome (3) has the shape of a hollow cylinder and features at least two core-hole wall face areas (5) which are at least partially spaced relative to each other in longitudinal direction of the screw dome (3), **characterised in that** the contact face is provided between the screw and the material in the at least two core-hole wall face areas (5) which are at least partially spaced relative to each other in longitudinal direction of the screw dome (3).

2. Screwed connection for a component according to Claim 1, **characterised in that** the at least two core-hole wall face areas (5) which are at least partially spaced relative to each other in longitudinal direction of the screw dome (3) are formed by jacket faces of at least two through holes (12) provided in a component wall (2) which, at least in certain areas, is of wave- and/or fold-type design.

3. Screwed connection for a component according to Claim 1, **characterised in that** the at least two core-hole wall face areas (5) which are at least partially spaced relative to each other in longitudinal direction of the screw dome (3) are formed by a jacket area of a pocket hole and a jacket face of at least one through hole (12), whereby the pocket hole and the at least one through hole (12) are arranged in a component wall (2) which, at least in certain areas, is of wave- and/or fold-type design.

4. Screwed connection for a component according to one of the Claims 1 to 3, **characterised in that** the plastic material is at least partially made from thermoplastic material.

5. Screwed connection for a component according to one of the Claims 1 to 4, **characterised in that** in longitudinal direction the core-hole wall face (4) of the the screw dome (3) has the shape of a hollow cylinder and a length which is at least twice as long as an external diameter of the screw.

6. Screwed connection for a component according to one of the Claims 1 to 5, **characterised in that** the screw dome (3) designed as a pocket or through hole (12) has a screw dome depth of at least 6 mm in longitudinal direction.

7. Procedure for establishing a screwed connection for a component in which a screw dome (3), which has a core-hole wall face (4) with the shape of a hollow cylinder and is designed as a pocket or through core hole, is inserted into a component (1) made at least partially of plastic material and in which a screw which has an external thread with at least one course of thread is screwed into the screw dome (3), whereby a screw-type contact face is formed between the screw and the material, **characterised in that** with the screw a screw-type contact face between the screw and the material is formed in two core-hole face areas (5) of the core-hole wall face (4) of the screw dome (3), which core-hole wall face (4) has the shape of a hollow cylinder, the core-hole face areas (5) extending at least partially in the longitudinal direction of the screw dome (3) and being spaced relative to each other.

8. Procedure according to Claim 7, **characterised in that** the component (1) is designed as a synthetic component made in a rotation melting process, an injection moulding process for thermoplastic material, a hot pressing process, blowing process and/or a chip-removing process and that a passage hole (12) with two hole orifices located in facing surface areas of the first wall section is made in a first wall section of the component wall and a passage (12) or a pocket hole with at least one hole orifice located in a surface area of the second wall section is made in at least one second wall section of the component wall and that the component wall (2) is formed such that the hole orifices of the first and of the second wall sections are spaced relative to each other and overlap each other at least partially.

9. Procedure according to Claim 7 or 8, **characterised in that** the passage hole (12) is made in the first wall section by means of a drilling or milling process.

10. Procedure according to one of the Claims 7 to 9, **characterised in that** the passage (12) or pocket hole is made into a second wall section by means of a drilling or milling process.

## Revendications

1. Raccord fileté d'une pièce (1) présentant au moins partiellement un matériau plastique avec un bloc de fixation fileté (3) exécuté comme avant-trou borgne ou traversant, présentant une surface de paroi d'avant-trou en forme de cylindre creux (4), et avec une vis qui dispose d'un filetage mâle avec au moins un pas de vis et est vissable dans le bloc de fixation fileté (3) sous la formation d'une surface de contact en forme de vis entre la vis et le matériau, auquel cas la surface de paroi d'avant-trou en forme de cylindre creux (4) du bloc de fixation fileté (3) présente au moins deux zones de surface de paroi d'avant-trou (5) placées à une certaine distance l'une de l'autre partiellement dans le sens longitudinal du bloc de fixation fileté (3),
**caractérisée en ce que** la surface de contact entre la vis et le matériau est formée dans au minimum les deux zones de surface de paroi d'avant-trou (5) placées à une certaine distance l'une de l'autre partiellement dans le sens longitudinal du bloc de fixation fileté (3).

2. Raccord fileté d'une pièce selon la revendication 1, **caractérisée en ce qu'**au minimum les deux zones de surface de paroi d'avant-trou (5) placées à une certaine distance l'une de l'autre partiellement dans le sens longitudinal du bloc de fixation fileté (3) sont formées de surfaces latérales d'au moins deux trous de passage (12) prévus dans une paroi de pièce (2) conçue en forme annelée et/ou pliée au moins au niveau de sa section.

3. Raccord fileté d'une pièce selon la revendication 1, **caractérisée en ce qu'**au minimum les deux zones de surface de paroi d'avant-trou (5) placées à une certaine distance l'une de l'autre partiellement dans le sens longitudinal du bloc de fixation fileté (3) sont formées d'une surface latérale d'un trou borgne et d'une surface latérale d'au moins un trou de passage (12), auquel cas le trou borgne et au moins le trou de passage (12) sont disposés dans une paroi de pièce (2) conçue en forme annelée et/ou pliée au moins au niveau de sa section.

4. Raccord fileté d'une pièce selon l'une des revendications 1 à 3, **caractérisée en ce que** le matériau plastique présente au moins partiellement une matière synthétique thermoplastique.

5. Raccord fileté d'une pièce selon l'une des revendications 1 à 4, **caractérisée en ce que** la surface de paroi d'avant-trou en forme de cylindre creux (4) du bloc de fixation fileté (3) dispose dans le sens longitudinal d'une longueur qui correspond au moins à une valeur double d'un diamètre extérieur de la vis.

6. Raccord fileté d'une pièce selon l'une des revendications 1 à 5, **caractérisée en ce que** le bloc de fixation fileté (3) exécuté comme trou borgne ou comme trou de passage présente dans le sens longitudinal une profondeur de bloc de fixation fileté d'au moins 6 mm.

7. Procédé pour fabriquer un raccord fileté d'une pièce avec lequel un bloc de fixation fileté (3) exécuté comme avant-trou borgne ou avant-trou continu présentant une surface de paroi d'avant-trou en forme de cylindre creux (4) est réalisé dans une pièce (1) présentant au moins partiellement un matériau plastique et avec lequel une vis qui dispose d'un filetage mâle avec au moins un pas de filetage est vissée par la formation d'une surface de contact en forme de vis entre la vis et le matériau dans le bloc de fixation fileté (3), **caractérisé en ce qu'**à l'aide de la vis, une surface de contact en forme de vis est formée entre la vis et le matériau au moins dans deux zones de surface de paroi d'avant-trou (5) placées à une certaine distance l'une de l'autre partiellement dans le sens longitudinal de la surface de paroi d'avant-trou en forme de cylindre creux (4) du bloc de fixation fileté (3).

8. Procédé selon la revendication 7, **caractérisé en ce que** la pièce (1) est exécutée comme pièce en matière plastique produite au moyen d'un procédé de fusion par rotation, de moulage par injection thermoplastique, d'emboutissage à chaud, de soufflage et/ou au moyen d'un procédé de fabrication par enlèvement de copeaux, et **en ce que** sont réalisés, dans une première section de paroi, un trou de passage (12) avec deux ouvertures de trou se trouvant dans des zones de surface opposées de la première section de paroi et, dans au moins une deuxième section de paroi de la paroi de la pièce, un trou de passage (12) ou un trou borgne avec au moins une ouverture de trou se trouvant dans une zone de surface de la deuxième section de paroi, et **en ce que** la paroi de pièce (2) est formée de telle manière que les ouvertures de trou des première et deuxième sections de paroi se chevauchent au moins partiellement tout en étant éloignées l'une de l'autre dans l'espace.

9. Procédé selon la revendication 7 ou 8, **caractérisé en ce que** le trou de passage (12) est réalisé dans la première section de paroi au moyen d'un processus de perçage ou de fraisage.

10. Procédé selon l'une des revendications 7 à 9, **caractérisé en ce que** le trou de passage (12) ou trou borgne est réalisé dans au moins une deuxième section de paroi au moyen d'un processus de perçage ou de fraisage.
